**Europäisches Patentamt**

**European Patent Office**

**Office européen des brevets**

(11) Veröffentlichungsnummer: **0 033 786**
**A1**

# (12) EUROPÄISCHE PATENTANMELDUNG

(21) Anmeldenummer: 80200182.6

(22) Anmeldetag: 03.03.80

(51) Int. Cl.³: **H 02 M 7/08,** H 02 M 7/17, H 01 L 23/32

(30) Priorität: 06.02.80 CH 932/80

(43) Veröffentlichungstag der Anmeldung: **19.08.81** **Patentblatt 81/33**

(84) Benannte Vertragsstaaten: **AT BE CH DE FR GB IT LU NL SE**

(71) Anmelder: **BBC Brown, Boveri & Cie. (Aktiengesellschaft), CH-5401 Baden (CH)**

(72) Erfinder: **Knapp, Peter, Dipl.-Ing., Mühleweg 295, CH-5422 Oberehrendingen (CH)**

(54) **Hochstrom-Stromrichter.**

(57) Ein Hochstrom-Stromrichter mit mehreren parallelgeschalteten Halbleiterelementen (6), welche an zwei Schienen (2; 4, 5) angeschlossen sind, ist so ausgebildet, daß die zweite Schiene (4, 5) U-förmig ist, wobei die Stromanschlüsse (1, 3) beider Schienen (2; 4, 5) an entfernten Enden dieser Schienen durchgeführt sind. Der Vorteil ist darin zu sehen, daß innerhalb des Stromrichters feldfreie Linie erreicht wird, die als Einbauort von empfindlichen Elementen, z. B. von Impulsübertragern für Thyristoren dienen kann.

- 1 -

## Hochstrom-Stromrichter

Die vorliegende Erfindung betrifft einen Hochstrom-Stromrichter gemäss dem Oberbegriff des Anspruchs 1.

Bei der Verwendung von Hochleistungs-Halbleiterelementen und durch den Einsatz von wirkungsvollen Kühlmethoden zum Abführen der Verlustwärme aus den stromführenden Komponenten erreichen bereits die in kleinen Stromrichtern fliessenden Ströme eine Grössenordnung bis gegen 100 kA und in Störungsfällen noch eine Grössenordnung mehr. In den Hochstrom-Stromrichtern sind die Funktionseinheiten, die sich auf niedrigem Energieniveau befinden, wie z.B. Impulsübertrager und Temperaturüberwachung, dem unmittelbaren Einfluss des Megnetfeldes von Hochstromleitungen ausgesetzt. In der CH-PS 414 832 ist eine Stromrichteranordnung mit mehreren parallelgeschalteten Stromrichterelementen beschrieben und dargestellt. Diese Anordnung hat die Aufgabe, die Stromverteilung in den parallelgeschalteten Stromrichterelementen gleichmässiger zu realisieren. So ist z.B. die Zuleitung auf der einen Sammelschiene in der Mitte und die Ableitung auf der anderen Sammelschiene an beiden Enden angeordnet. Der Gegenstand dieser CH-Patentschrift dient jedoch nicht zum Erreichen feldfreier Punkte in einem Stromrichter.

- 2 -

Der im Anspruch 1 angegebenen Erfindung liegt die Aufgabe zugrunde, einen Stromrichter gemäss dem Oberbegriff des Anspruchs 1 so auszubilden, dass innerhalb des Stromrichters feldfreie Punkte erreicht werden. Diese liegen im wesentlichen an einer Verbindungslinie, die sich zwischen dem nicht an Netz angeschlossenen Ende der ersten Schiene und dem Mittelpunkt der Anschlüsse der Halbleiterelemente an den Enden der zweiten U-förmigen Schiene befinden. Die Entstehung der feldfreien Linie wird durch die Symmetrie der Konstruktion ermöglicht. Die Linie verläuft nicht parallel mit den Schienen. Sie liegt zwar in der Symmetrieebene, ist jedoch in bezug auf die Richtung der Schienen geneigt. Der Strom in den Stromanschlüssen der Schienen vermindert sich stufenweise bei jeder Abzweigung durch die Halbleiterelemente. Das bedeutet, dass der Strom in den Stromanschlüssen das stärkste magnetische Feld verursacht. In den nicht angeschlossenen Enden der Schienen fliesst kein Strom, so dass auch kein magnetisches Feld entsteht. Die feldfreie Linie ist also von den Stromanschlüssen der Schienen entfernt.

Der Vorteil der Erfindung liegt insbesondere darin, dass die feldfreien Punkte als Einbauort von empfindlichen Komponenten verwendet werden können, wobei sie ohne aufwendige Abschirmmassnahmen höchstens nur gering magnetisch beeinträchtigt werden können.

Vorteilhafte Weiterbildungen der Erfindung sind in den Unteransprüchen beschrieben. Die Kühler gemäss Anspruch 2 erlauben eine höhere Strombelastung des Stromrichters. Die

- 3 -

Sicherungen nach Anspruch 3 schalten beim Kurzschluss den defekten Strompfad ab. Die Ausführungsform nach Anspruch 4 zeigt eine zweckmässige Ausgestaltung. Es ist selbstverständlich, dass an Stelle der beispielsweise genannten Impulsübertrager auch andere, an magnetische Felder empfindliche Einheiten angeordnet sein können, wie Sensorglieder für Temperaturüberwachung, Stromführungsüberwachung oder Spannungsüberwachung.

Die Erfindung ist im folgenden anhand schematischer Zeichnungen näher erläutert.

Es zeigt:

Fig. 1 eine Vorderansicht auf eine beispielsweise erfindungsgemässe Ausgestaltung eines Hochstrom-Stromrichters,

Fig. 2 den Schnitt II-II gemäss Fig. 1,

Fig. 3 den Schnitt III-III gemäss Fig. 1.

Alle zum unmittelbaren Verständnis der Erfindung nicht notwendigen Konstruktionsmerkmale, beispielsweise die Tragkonstruktion, die Rippen der Kühler und Befestigungselemente, sind in den Zeichnungen fortgelassen worden.

Gleiche Teile sind in den Zeichnungen mit denselben Bezugsziffern versehen.

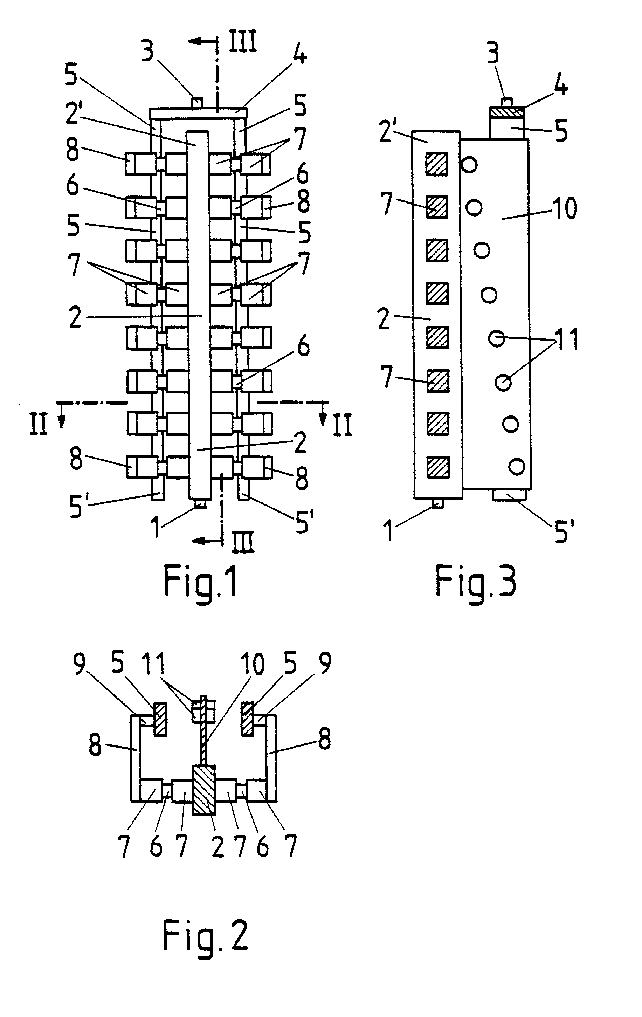

Gemäss Fig. 1 ist ein Wechselstromanschluss 1 am unteren

- 4 -

Ende einer ersten Schiene 2 angebracht. Ein Gleichstromanschluss 3 ist in der Mitte einer Schiene 4 befestigt, die
den mittleren Teil einer zweiten U-förmigen Schiene bildet,
deren weitere Teile Gleichstromsammelschienen 5 bilden.
Als Halbleiterelemente 6 sind Thyristoren verwendet, beidseitig mit Kühlern 7 versehen und über je einen Kühler 7
an die erste Schiene 2 paarweise befestigt. Die anderen
Kühler 7 sind an Verbindungsleiter 8 angeschlossen.

In dem in Fig. 2 gezeigten Schnitt II-II sind Sicherungen
9 dargestellt, die zwischen den Enden der Verbindungsleiter 8 und den Gleichstromsammelschienen 5 befestigt sind.

In der Symmetrieebene ist eine Kunststoffplatte 10 befestigt, die in dieser beispielweisen Ausführungsform
Impulsübertrager 11 für die Thyristoren 6 trägt.

Diese Kunststoffplatte 10 mit den Impulsübertragern 11 ist
auch in der Figur 3 gezeigt. In dieser Figur ist auch die
Anordnung der Impulsübertrager 11 in der feldfreien Linie
dargestellt.

Die gezeichnete Einheit des Hochstrom-Stromrichters besteht aus acht Paaren von parallelgeschalteten Thyristoren
6. Die Schienen 2 und 5 sind parallel angeordnet, so dass
in ihnen der Strom in denselben parallelen Richtungen (von
unten nach oben) fliesst. Es ist selbstverständlich, dass
die Lage der Anordnung für die Funktionsweise nicht wichtig ist.

- 5 -

Patentansprüche

1. Hochstrom-Stromrichter mit mehreren parallel geschalteten Halbleiterelementen, welche in einer Einheit an zwei Schienen angeschlossen sind, wobei die Halbleiterelemente paarweise an die erste Schiene angeschlossen sind, dadurch gekennzeichnet, dass die zweite Schiene (4, 5) U-förmig ausgebildet ist und die anderen Enden der Halbleiterelemente (6) an die gegenseitig und mit der ersten Schiene (2) parallelen Teile (5) der zweiten Schiene (4, 5) angeschlossen sind, wobei der Stromanschluss (1) der ersten Schiene (2) auf dem Ende der ersten Schiene (2) angeordnet ist, das von dem Teil (4) der zweiten Schiene (4, 5), der ihre parallelen Teile (5) verbindet und mit dem Stromanschluss (3) versehen ist, entfernt ist, so dass die Ströme in der ersten Schiene (2) und in den gegenseitig und mit der ersten Schiene (2) parallelen Teilen (5) der zweiten Schiene (4, 5) nur in denselben parallelen Richtungen fliessen können.

2. Stromrichter nach Anspruch 1, dadurch gekennzeichnet, dass Halbleiterelemente (6) wenigstens einseitig mit je einem Kühler (7) versehen sind.

- 6 -

3. Stromrichter nach Anspruch 1, dadurch gekennzeichnet, dass in Serie mit jedem Halbleiterelement (6) wenigstens eine Sicherung (9) angeschlossen ist.

4. Stromrichter nach Anspruch 1, dadurch gekennzeichnet, dass in der Symmetrieebene je einer Einheit des Stromrichters in einer Diagonale zwischen den nicht angeschlossenen Enden (2', 5') der Schienen (2, 5) für jedes Paar der Halbleiterelemente (6) wenigstens eine sich auf niedrigem Energieniveau befindende Einheit, z.B. ein Impulsübertrager, angeordnet ist.

Bezeichnungsliste

1   =   Wechselstromanschluss

2   =   erste Schiene

2'  =   nicht angeschlossenes Ende der
        ersten Schiene 2

3   =   Gleichstromanschluss

4   =   mittlerer Teil einer zweiten
        U-förmigen Schiene

5   =   parallele Teile der zweiten Schiene -
        Gleichstromsammelschienen

5'  =   nicht angeschlossene Enden der zweiten Schiene 5

6   =   Halbleiterelemente - Thyristoren

7   =   Kühler der Halbleiterelemente 6

8   =   Verbindungsleiter

9   =   Sicherungen

10  =   Kunststoffplatte

11  =   Impulsübertrager

Fig.1

Fig.3

Fig.2

Europäisches
Patentamt

**EUROPÄISCHER RECHERCHENBERICHT**

0033786

Nummer der Anmeldung

EP 80 20 0182.6

| Kategorie | EINSCHLÄGIGE DOKUMENTE | | KLASSIFIKATION DER ANMELDUNG (Int.Cl.3) |
|---|---|---|---|
| | Kennzeichnung des Dokuments mit Angabe, soweit erforderlich, der maßgeblichen Teile | betrifft Anspruch | |
| | DE - B2 - 1 563 270 (LICENTIA PATENT-VERWALTUNGS-GMBH) <br> * Spalte 3, Zeilen 5 bis 48 * <br> -- | 1,2 | H 02 M 7/08 <br> H 02 M 7/17 <br> H 01 L 23/32 |
| | DE - U - 1 936 988 (STANDARD ELEKTRIK LORENZ AG) <br> * Seite 3, Absatz 2 und folgende * <br> -- | 1,2 | |
| | DE - A - 1 563 353 (D. SCIAKY) <br> * Seite 5, Absatz 2 * <br> -- | 1,2 | **RECHERCHIERTE SACHGEBIETE (Int. Cl.3)** |
| | DE - B1 - 2 739 245 (SIEMENS AG) <br> * Spalte 3, Zeilen 41 bis 66 * <br> -- | 1,3 | H 01 L 23/00 <br> H 02 M 1/00 |
| | DE - B - 1 614 640 (SIEMENS AG) <br> * Spalte 2, Zeile 64 bis Spalte 3, Zeile 5 * <br> ---- | 4 | H 02 M 7/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 23-12-1980 | GESSNER |

EPA form 1503.1   06.78